## Europäisches Patentamt

## European Patent Office

## Office européen des brevets

(19)

(11) Veröffentlichungsnummer: **0 069 323**
**B1**

(12) **EUROPÄISCHE PATENTSCHRIFT**

(45) Veröffentlichungstag der Patentschrift:
**29.05.85**

(51) Int. Cl.⁴: **B 01 D 39/14**

(21) Anmeldenummer: **82105735.3**

(22) Anmeldetag: **28.06.82**

(54) Filtermatte, insbesondere für Küchendunsthauben u.dgl. und Verfahren zu ihrer Herstellung.

(30) Priorität: **07.07.81 DE 3126645**

(43) Veröffentlichungstag der Anmeldung:
**12.01.83 Patentblatt 83/2**

(45) Bekanntmachung des Hinweises auf die Patenterteilung:
**29.05.85 Patentblatt 85/22**

(84) Benannte Vertragsstaaten:
**AT BE CH FR GB IT LI NL SE**

(56) Entgegenhaltungen:
**DE - A - 2 123 159**
**DE - A - 2 216 574**
**DE - A - 2 905 212**
**DE - B - 1 254 127**
**DE - B - 1 279 917**
**DE - C - 923 721**
**DE - C - 932 792**
**GB - A - 1 434 358**
**US - A - 4 239 516**

(73) Patentinhaber: **COLLO GmbH, Simon-Arzt-Strasse 2, D-5303 Bornheim-Hersel (DE)**

(72) Erfinder: **Irgel, Lutz, Hangweg 12, D-5205 St. Augustin 1 (DE)**
Erfinder: **Modjesch, Hans-Georg, Plittersdorfer Strasse 162, D-5300 Bonn 1 (DE)**

(74) Vertreter: **Vollbach, Hans, Dipl.-Ing. et al, Patentanwälte Dipl.-Ing. Buschhoff Dipl.Ing Hennicke Dipl.-Ing. Vollbach Kaiser-Wilhelm-Ring 24, D-5000 Köln 1 (DE)**

# Beschreibung

Die Erfindung betrifft eine Filtermatte, insbesondere für Küchendunsthauben u. dgl., bestehend aus einem Schichtkörper mit mindestens zwei porösen und flexiblen Deckbahnen und einer zwischen diesen Deckbahnen liegenden Schicht eines körnigen Filtermittels, wobei die Deckbahnen in einer Flächenfixierung mit einer Vielzahl über die Mattenfläche verteilten Fixierungspunkten zu einer zuschneidbaren Filtermatte aneinander fixiert sind. Ferner bezieht sich die Erfindung auf ein Verfahren zum Herstellen solcher Filtermatten.

Für Küchendunst-Umluft- und -Ablufthauben oder sonstige Luftreinigungsgeräte verwendet man als Filtermittel körnige Filterstoffe, wie insbesondere Aktivkohle oder katalytisch bzw. chemisch wirkende Stoffe. Diese schüttfähigen Filterstoffe werden z. B. in Filterkassetten gefüllt, welche im Luftweg der zu filternden Luft angeordnet werden, so daß die Luft die durchlässigen Filterkassetten und das in ihnen befindliche Schüttstoff-Filtermaterial durchströmt.

Filterkassetten für die Geruchsbeseitigung sind in zahlreichen Ausführungen bekannt. Sie werden z. B. aus Metallgittern, gelochten Metallblechen, perforiertem Karton oder auch aus Kunststoff-Spritzgußteilen hergestellt. Aus dem DE-U-7 437 150 ist z. B. eine Filterkassette bekannt, dessen eine Vielzahl von Kassettenfeldern bildendes Gehäuseteil aus einer perforierten, tiefgezogenen flexiblen Kunststoffolie besteht. Zur Abdeckung der mit dem körnigen Filtermittel gefüllten Kassetten des Gehäuseteils dient eine flexible, poröse Deckbahn aus einem Textilgewebe oder Faservlies od. dgl., die am Umfang mit dem Gehäuseteil durch Kleben oder Schweißen verbunden ist.

Die vorgenannten Filterkörper sind in der Fertigung verhältnismäßig teuer und haben außerdem den Nachteil, daß für die verschiedenartigen Küchendunsthauben oder sonstige Filtergeräte Filterkassetten unterschiedlicher Formate zur Verfügung gestellt werden müssen. Hierdurch wird die Fertigung und auch die Lagerung der Filterkassetten beträchtlich verteuert.

Es ist aus der DE-A-2 123 159 auch schon eine Geruchsfiltermatte bekannt, bei der eine körnige Filtermittelschicht zwischen zwei porösen und flexiblen Deckschichten, die aus dünnen Faservliesen od. dgl. bestehen, eingelagert und mit diesen durch Vernadeln zu einem flächenhaften Schichtkörper verbunden sind. Als Filtermittel wird hier ein Gemisch aus feinkörniger Aktivkohle und großteiligen Schaumstoffflocken verwendet. Die Herstellung solcher Filtermatten ist ebenfalls verhältnismäßig aufwendig und führt insbesondere bei Verwendung gröberer Aktivkohle zu einem verhältnismäßig häufigen Bruch der zur Vernadelung der Vliese dienenden Nadeln. Dies zwingt dazu, einen verhältnismäßig großen Anteil an Schaumstoffflocken zu verwenden, was wiederum den Nachteil hat, daß die Aktivkohlenschicht durch die eingelagerten Schaumstoffflocken unterbrochen wird.

Aus der US-A-3 091 550 ist es bekannt, körnige Filtermittel, wie Aktivkohle u. dgl., mit einem in Wasser dispergierbarem Kleber zu vermischen und eine Trägerbahn aus Papier, Textilmaterial od. dgl. mit dem breiförmigen Gemisch zu beschichten.

Aufgabe der Erfindung ist es, eine Filtermatte der eingangs genannten Art zu schaffen, die sich durch hohe Filterwirkung bei vergleichsweise einfacher und preiswerter Herstellung auszeichnet und die sich praktisch verlustfrei leicht auf unterschiedliche Formate zuschneiden läßt.

Diese Aufgabe wird erfindungsgemäß dadurch gelöst, daß die Dicke der porösen Deckbahnen größer ist als die Dicke der zwischen den Deckbahnen liegenden körnigen Filtermittelschicht, die höchstens gleich der zweifachen mittleren Korngröße des Filtermittels ist, und daß das körnige Filtermittel untereinander und an den Deckbahnen mittels eines lösungsmittelfreien, in Wasser dispergierbaren Klebers unter Bildung einer Vielzahl punkt- und faserförmiger Klebemittelverbindungsstellen fixiert ist und somit die Deckbahnen über die Kornverklebung aneinander fixiert sind.

Bei der erfindungsgemäßen Filtermatte ist demgemäß das körnige Filtermittel mittels des lösungsmittelfreien, in Wasser dispergierbaren Klebers unter einer Bildung einer Vielzahl punkt- oder faserförmiger Klebemittelverbindungsstellen untereinander und an den Deckbahnen fixiert. Es wird auf diese Weise eine Flächenfixierung erreicht, so daß sich die aus dem Schichtverbund bestehende Filtermatte transportieren, handhaben und auf beliebige Gebrauchsformate zuschneiden läßt, ohne daß hierbei das körnige Filtermittel sich in der Filtermatte unerwünscht verlagert oder gar aus der Filtermatte herausrieselt. Die besondere Art der Verklebung erlaubt es, auf eine besondere Randeinfassung der Filtermatte zu verzichten. Die Gefahr, daß beim Zuschneiden der Filtermatte auf das jeweilige Gebrauchsformat nennenswerte Mengen des körnigen Filtermittels an den Schnittstellen herausrieselt, besteht nicht, da, wie erwähnt, die einzelnen Körner der Filtermittel mit Hilfe des Klebers etwa punktförmig aneinander und an den porösen Deckbahnen fixiert sind. Aufgrund der punkt- und faserförmigen Klebeverbindung wird auch sichergestellt, daß die Klebeverbindung nicht zu einer nennenswerten Verminderung der filterwirksamen Oberfläche des körnigen Filtermittels oder zu einer untragbaren Verminderung der Luftdurchlässigkeit der porösen Deckbahnen führt. Die punkt- und faserförmige Klebemittelfixierung des körnigen Filtermittels zwischen den Deckbahnen wird dadurch begünstigt, daß die Dicke der Filtermittelschicht auf höchstens die zweifache mittlere Korngröße des Filtermittels begrenzt wird. Hierbei kann bei äußerst sparsamer Verwendung des Klebemittels eine zuverlässige Fixierung des körnigen Filtermittels und ein ausreichend fester Verbund desselben mit den Deckbahnen erreicht werden. Die Einlagerung der körnigen Filtermittelschicht zwischen Deckbahnen, deren Dicke größer ist als diejenige der Filtermittelschicht, begünstigt die Verbundwirkung und auch die Filterwirkung. Von der zu filternden Luft mitgeführte Fremdstoffe, z. B. Wasser- und Fettbestandteile, wie sie insbesondere bei Koch- und Fettschwaden u. dgl. anzutreffen sind, werden in der in Luftströmungsrichtung vorgeschalteten Deckbahn aus der Luft ausgefiltert, so daß diese Stoffe die zwischen den Deckbahnen liegende Filtermittelschicht nicht belasten bzw. in ihrer Filterwirksamkeit in bezug auf die von der Luft mitgeführten Geruchsstoffe nicht beeinträchtigen.

Es ist ohne weiteres auch möglich, die Dicke der Filtermittelschicht so einzustellen, daß sie gleich der mittleren Korngröße des Filtermittels ist. Bei einer bevorzugten Ausführungsform der Erfindung weist die Filtermatte mindestens drei poröse Deckbahnen mit mindestens zwei dazwischen fixierten körnigen Filtermittelschichten auf, wobei sämtliche Deckbahnen eine größere Dicke aufweisen als die körnigen Filtermittelschichten. Eine solche Filtermatte zeichnet sich durch besonders hohe Filterwirksamkeit bei Wahrung der sonstigen Vorteile, wie Zuschneidbarkeit auf beliebige Gebrauchsformate, aus. Es hat sich gezeigt, daß sich mit diesen Maßnahmen eine Filtermatte herstellen läßt, die zumindest die gleich gute Wirkung wie die bekannten Geruchsfilter hat, zugleich aber eine deutlich geringere Menge an körnigem Filtermittel aufweisen kann.

Die mittlere Korngröße des Filtermittels beträgt zweckmäßig etwa 0,5 bis 2 mm, während die porösen Deckbahnen eine Dicke von etwa 1 bis 8 mm, vorzugsweise 3 bis 6 mm, aufweisen. Für den lösungsmittelfreien, in Wasser dispergierbaren Kleber kann Latexmilch, Polyvinylacetat, Polyvinylalkohol, Acrylestercopolymerisate eingesetzt werden. Solche Kleber lassen sich so einsetzen, daß sie sich beim Aushärten etwa faden- oder faserartig zusammenziehen, wobei die filterwirksamen Körner über diese feinen Faserverbindungen aneinander und an den Deckbahnen fixiert werden.

Als körniges Filtermittel kann mit Vorteil imprägnierte oder nicht-imprägnierte Aktivkohle, daneben aber auch Tonerde, Molekularsieb, Silicagel, alkalisch und/oder sauer reagierende Sorbentien eingesetzt werden. Die mittlere Korngröße des körnigen Filtermittels ist zweckmäßig größer als die mittlere Porengröße der porösen Deckbahnen. Für die Deckbahnen werden vorzugsweise Faservliese verwendet, obwohl auch andere poröse und flexible Deckbahnen, z. B. solche aus grobporigem Schaumstoff, aus einem Gewebe, einschließlich einem Glasfaservlies oder Glasfasergewebe, Verwendung finden können.

Die erfindungsgemäße Filtermatte läßt sich mit einfachen Verfahrensmaßnahmen preiswert herstellen. Vorzugsweise erfolgt dies nach dem erfindungsgemäßen Verfahren in der Weise, daß zur Fixierung der körnigen Filtermittelschicht an den Deckbahnen der Kleber in geschäumtem Zustand auf die Oberfläche der Deckbahn(en) und/oder auf die Oberfläche der bereits fixierten körnigen Filtermittelschicht aufgesprüht wird, bevor die einzelnen Schichten zu dem Schichtkörper fixiert werden, wobei der lösungsfreie, mit Wasser verdünnte Kleber durch Zusatz einer leicht verdampfenden Flüssigkeit aufgeschäumt wird. Als leicht verdampfende Flüssigkeit kann ein bei niedriger Temperatur verdampfbares Lösungsmittel, vorzugsweise Frigen, zugesetzt werden.

Die Erfindung wird nachfolgend im Zusammenhang mit dem in der Zeichnung dargestellten bevorzugten Ausführungsbeispiel einer erfindungsgemäßen Geruchsfiltermatte näher erläutert. Es zeigt

Fig. 1 eine erfindungsgemäße Filtermatte schematisch in perspektivischer Darstellung;

Fig. 2 in starker Vergrößerung und in teilperspektivischer Schnittdarstellung einen Ausschnitt aus der Filtermatte entsprechend dem Ausschnitt II der Fig. 1;

Fig. 3 in starker Vergrößerung und Schematisierung eine Einzelheit.

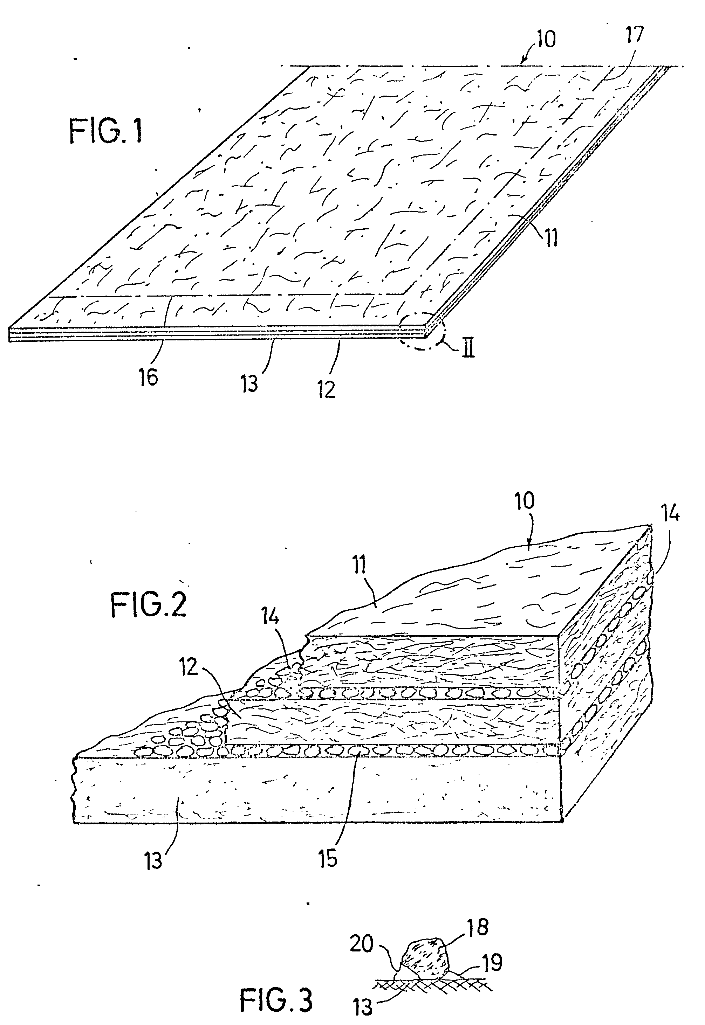

Die dargestellte flexible Filtermatte 10 besteht aus einem zusammenhängenden Schichtkörper, der von drei Deckbahnen 11, 12 und 13 gebildet ist, zwischen denen zwei Schichten 14 und 15 eines körnigen Filtermittels liegen. Die Deckbahnen 11, 12, 13 bestehen aus einem porösen und flexiblen Material, vorzugsweise aus Faservliesen der für Filterzwecke bekannten Art. Die Deckbahnen 11, 12 und 13 weisen dieselbe Dicke auf, die, wie aus Fig. 2 ersichtlich, um ein Mehrfaches größer ist, als die Dicke der Filtermittelschichten 14 und 15. Je nach Art der Deckbahnen 11, 12 und 13 beträgt deren Dicke im allgemeinen etwa 1 bis 8 mm, vorzugsweise 3 bis 6 mm. Die Dicke der körnigen Filtermittelschichten 14 und 15 ist bei dem gezeigten Ausführungsbeispiel gleich der mittleren Korngröße des verwendeten Filtermittels, z. B. der verwendeten Aktivkohle, deren mittlere Korngröße bei dem gezeigten Ausführungsbeispiel etwa 0,5 mm beträgt.

Die porösen und flexiblen Deckbahnen 11, 12 und 13 sind mittels eines Klebers in einer Flächenfixierung zu einer im Format zuschneidbaren Filtermatte verbunden, wobei die Anordnung so getroffen ist, daß das die Filtermittelschichten 14 und 15 bildende körnige Filtermittel mit Hilfe des Klebers etwa punktförmig an den Deckbahnen 11, 12 und 13 fixiert ist, so daß letztere über das körnige Filtermittel auch zueinander über die gesamte Mattenfläche fixiert sind. Dies ermöglicht es, die fertige Geruchsfiltermatte auf das jeweils gewünschte Gebrauchsformat zuzuschneiden. Bei dem Ausführungsbeispiel nach Fig. 1 hat die Filtermatte ein Rechteckformat. Sie läßt sich z. B. durch Schneiden entlang den strichpunktiert angedeuteten Schnittlinien 16 und 17 auf ein kleineres Gebrauchsformat schneiden, ohne daß beim Schneidvorgang nennenswerte Mengen des körnigen Filtermittels an den Schneidrändern aus der Filtermatte herausrieseln.

Die Art der Fixierung der einzelnen Körner des die Filtermittelschicht 14 und 15 bildenden Filtermittels ist in Fig. 3 in starker schematischer Vereinfachung veranschaulicht. Dabei ist ein einzelnes Filtermittelkorn, z. B. ein Aktivkohlekorn 18 in seiner Haftung an einer porösen Deckbahn, z. B. der Deckbahn 13 gezeigt, die, wie erwähnt, bei dem Ausführungsbeispiel von einem Faservlies gebildet wird. Die Kornfixierung an der Deckbahn 13 erfolgt mittels feinster Klebemittelfasern 19 und 20, welche einen festen, punktförmigen Verbund der Fasern der Deckbahn 13 mit dem Filtermittelkorn 18 herstellen, ohne daß die wirksame Oberfläche des Korns 18 durch den Kleber nennenswert vermindert wird.

Als Kleber wird ein lösungsmittelfreier, in Wasser dispergierbarer Kleber, wie z. B. Latexmilch, Polyvinylacetat, Polyvinylalkohol oder Acrylestercopolymerisat u. dgl. verwendet. Dabei wird vorteilhafterweise wie folgt vorgegangen:

Der Kleber wird, ggf. unter Zusatz eines Netzmittels, herkömmlicher Art, mit Wasser verdünnt. Ferner wird in den verdünnten Kleber eine Flüssigkeit eingerührt, die, wie vorzugsweise Frigen, leicht verdampft. Das so hergestellte Klebergemisch wird auf die Oberfläche der Deckbahn 13 aufgesprüht. Anschließend wird auf die besprühte Oberfläche der Deckbahn 13 die zur Bildung der Filtermittelschicht 15 bestimmte Menge an körniger Aktivkohle od. dgl. aufgestreut. Dann wird die aufgestreute Filtermittelschicht 15 mit dem genannten Kleber besprüht und durch die Deckbahn 12 abgedeckt. In gleicher Weise wird dann die zweite körnige Filtermittelschicht 14 und die dritte Deckbahn 11 aufgebracht und durch Verkleben fixiert. Gegebenenfalls können in gleicher Weise weitere Filtermittelschichten und weitere poröse Deckbahnen zu dem Schichtkörper aufbauen. Auf diese Weise ist es ohne weiteres möglich, Filtermatten mit einem Aktivkohlegewicht bis zu etwa 1 kg/m$^2$ herzustellen.

Die dem Kleber zugefügte leicht verdampfbare Flüssigkeit (Frigen) läßt die Klebertröpfchen beim Versprühen aufschäumen, so daß die aufgetragene Kleberschicht ein Mehrfaches an Volumen besitzt und praktisch jedes zu verklebende Aktivkohlekorn 18 und jede zu verklebende Faser der die Deckbahnen 11, 12, 13 bildenden Faservliese erreicht. Beim Aushärten des Klebers, d. h. beim Verdampfen der genannten Flüssigkeit und des zugesetzten Wassers verringert sich das Volumen des Klebers bis auf dessen dispersierten Anteil an Kunststoffen, wodurch sich der Kleber zu feinen Fäden oder Fasern zusammenzieht, wie dies in Fig. 3 schematisch bei 19 und 20 angedeutet ist. Hierdurch werden die einzelnen Körner des Filtermittels unverrückbar an den Deckbahnen fixiert.

Die so hergestellte Großfiltermatte wird zum Austrocknen und Abbinden des Klebers entweder kurzzeitig im leicht gepreßten Zustand erhitzt oder über einen längeren Zeitraum an der Luft zum Abtrocknen gebracht.

Die beschriebene Filtermatte kann entweder im Handverfahren oder auch maschinell hergestellt werden, wobei vorzugsweise kontinuierlich unter Verwendung von Deckbahnrollen gearbeitet wird. Anschließend können die fertiggestellten Filtermatten auf das Gebrauchsformat zugeschnitten und ohne Randversteifung oder einer sonstigen Randeinfassung eingesetzt werden.

Bevorzugter Anwendungsbereich der erfindungsgemäßen Filtermatten sind die bekannten Küchendunsthauben. Es besteht aber auch die Möglichkeit, die erfindungsgemäßen Geruchsfiltermatten auch für andere Gas- und Luftfilterzwecke, z. B. in Friteusen, oder auch als statische Geruchsfilter in kleinen geschlossenen Räumen einzusetzen. Wie erwähnt, läßt sich die erfindungsgemäße Geruchsfiltermatte auf jedes beliebige Format zuschneiden.

Für die porösen Deckbahnen werden, wie erwähnt, vorzugsweise Faservliese, insbesondere solche aus Baumwolle oder Kunstfasern eingesetzt, obwohl auch Glasfaservliese, Schaumstoffbahnen oder Gewebebahnen aus natürlichem oder synthetischem Material einschließlich Glasfasermaterial u. dgl. verwendbar sind. Wichtig ist vor allem, daß das Material der Deckbahnen eine hohe Luftdurchlässigkeit besitzt. Die Dicke der Deckbahnen beträgt vorzugsweise 1 bis 8 mm, bei Verwendung von Faservliesen zweckmäßig 3 bis 6 mm. Im allgemeinen empfiehlt es sich, die Filtermatte aus drei bis fünf Deckbahnschichten und entsprechend zwei bis vier Filtermittelschichten herzustellen. Als körniges Filtermittel können die hierfür bekannten ad- oder absorbierenden Stoffe, wie vor allem Aktivkohle, imprägniert oder nicht-imprägniert mit katalytischen Stoffen, Verwendung finden, obwohl sich auch andere filterwirksame Körnungen aus alkalisch oder sauer-reagierenden Sorbentien einsetzen lassen. Ebenfalls verwendbar sind Tonerde, Molekularsieb oder Silicagel. Die vorgenannten filterwirksamen Stoffe können einzeln oder auch in Kombination eingesetzt werden, wobei ihre mittlere Korngröße zweckmäßig größer ist als die Porengröße der Deckbahnen und vorteilhafterweise bei 0,5 bis 2 mm liegt. Die Schichten 14 und 15 des filterwirksamen Mittels haben, wie erwähnt, vorzugsweise eine maximale Dicke von etwa des zweifachen Körnungsdurchmessers. Sie können dieselbe Dicke oder auch unterschiedliche Dicken aufweisen, um z. B. die Gesamtdicke der Filtermatte möglichst gering zu halten.

## Patentansprüche

1. Filtermatte, insbesondere für Küchendunsthauben u. dgl., bestehend aus einem Schichtkörper mit mindestens zwei porösen und flexiblen Deckbahnen (11, 12, 13) und einer zwischen diesen Deckbahnen liegenden Schicht (14, 15) eines körnigen Filtermittels, wobei die Deckbahnen in einer Flächenfixierung mit einer Vielzahl über die Mattenfläche verteilten Fixierungspunkten zu einer zuschneidbaren Filtermatte (10) aneinander fixiert sind, dadurch gekennzeichnet, daß die Dicke der porösen Deckbahnen (11, 12, 13) größer ist als die Dicke der zwischen den Deckbahnen liegenden körnigen Filtermittelschicht (14, 15), die höchstens gleich der zweifachen mittleren Korngröße des Filtermittels ist, und daß das körnige Filtermittel untereinander und an den Deckbahnen (11, 12, 13) mittels eines lösungsmittelfreien, in Wasser dispergierbaren Klebers unter Bildung einer Vielzahl punkt- und faserförmigen Klebemittelverbindungsstellen fixiert ist und somit die Deckbahnen (11, 12, 13) über die Kornverklebung aneinander fixiert sind.

2. Filtermatte nach Anspruch 1, dadurch gekennzeichnet, daß die Dicke der Filtermittelschicht (14, 15) gleich der mittleren Korngröße des Filtermittels ist.

3. Filtermatte nach Anspruch 1 oder 2, dadurch gekennzeichnet, daß sie mindestens drei poröse Deckbahnen (11, 12, 13) mit mindestens zwei dazwischen fixierten körnigen Filtermittelschichten (14, 15) aufweist, wobei sämtliche Deckbahnen eine größere Dicke aufweisen als die körnigen Filtermittelschichten.

4. Filtermatte nach einem der Ansprüche 1 bis 3, dadurch gekennzeichnet, daß die mittlere Korngröße des Filtermittels etwa 0,5 bis 2 mm beträgt, während die porösen Deckbahnen (11, 12, 13) eine Dicke von etwa 1 bis 8 mm, vorzugsweise 3 bis 6 mm, aufweisen.

5. Filtermatte nach Anspruch 4, dadurch gekennzeichnet, daß der Kleber aus mindestens einem der folgenden Stoffe besteht: Latexmilch, Polyvinylacetat, Polyvinylalkohol, Acrylestercopolymerisate.

6. Filtermatte nach einem der Ansprüche 1 bis 5, dadurch gekennzeichnet, daß die Deckbahnen (11, 12, 13) aus einem Faservlies, aus grobporigem Schaumstoff, aus einem Gewebe, einschließlich einem Glasfaservlies oder Glasfasergewebe, bestehen.

7. Filtermatte nach einem der Ansprüche 1 bis 6, dadurch gekennzeichnet, daß das körnige Filtermittel aus mindestens einem der folgenden Stoffe besteht: imprägnierte oder nicht-imprägnierte Aktivkohle, Tonerde, Molekularsieb, Silicagel, alkalisch und/oder sauer reagierende Sorbentien.

8. Filtermatte nach einem der Ansprüche 1 bis 7, dadurch gekennzeichnet, daß die mittlere Korngröße des Filtermittels größer ist als die mittlere Porengröße der porösen Deckbahnen (11, 12, 13).

9. Verfahren zum Herstellen einer Filtermatte nach einem oder mehreren der Ansprüche 1 bis 8, dadurch gekennzeichnet, daß zur Fixierung der körnigen Filtermittelschicht (14, 15) an den Deckbahnen (11, 12, 13) der Kleber in geschäumtem Zustand auf die Oberfläche der Deckbahn(en) und/oder auf die Oberfläche der bereits fixierten körnigen Filtermittelschicht (14, 15) aufgesprüht wird, bevor die einzelnen Schichten (11, 12, 13, 14, 15) zu dem Schichtkörper fixiert werden, wobei der lösungsmittelfreie, mit Wasser verdünnte Kleber durch Zusatz einer leicht verdampfenden Flüssigkeit aufgeschäumt wird.

10. Verfahren nach Anspruch 9, dadurch gekennzeichnet, daß als leicht verdampfende Flüssigkeit ein bei niedriger Temperatur verdampfbares Lösungsmittel, vorzugsweise Frigen, zugesetzt wird.

**Claims**

1. Filter mat, especially for kitchen fume hoods and the like, comprising a laminated structure having at least two porous flexible covering webs (11, 12, 13) and one layer (14, 15) of a particulate filter material which is situated between the said covering webs, and the covering webs are fixed to one another over considerable areas with a plurality of fixing points distributed over the mat area to form a filter mat (10) which can be cut to size, characterised in that the thickness of the porous covering webs (11, 12, 13) is greater than the thickness of the particulate filter material layer (14, 15) which is situated between the covering webs, the latter thickness being at the most equal to twice the mean particle size of the filter material, and that the particulate filter material is fixed together and to the covering webs (11, 12, 13) by means of a solvent-free adhesive substance dispersable in water, with formation of a plurality of adhesive connections of fibre and dot form, and thus the covering webs (11, 12, 13) are fixed to one another by means of the adhesive fixing of the particles.

2. Filter mat according to claim 1, characterised in that the thickness of the layer of filter material (14, 15) is equal to the mean particle size of the filter material.

3. Filter mat according to claim 1 or 2, characterised in that it comprises at least three porous covering webs (11, 12, 13) with at least two particulate filter material layers (14, 15) fixed between them, and all the covering webs have a greater thickness than the particulate filter material layers.

4. Filter mat according to one of claims 1 to 3, characterised in that the mean particle size of the fiolter material amounts to approximately 0.5 to 2 mm, whereas the porous covering webs (11, 12, 13) have a thickness of approximately 1 to 8 mm, preferably 3 to 6 mm.

5. Filter mat according to claim 4, characterised in that the adhesive substance consists of at least one of the following subtances: latex milk, polyvinyl acetate, polyvinyl alcohol, acrylic ester copolymers.

6. Filter mat according to one of claims 1 to 5, characterised in that the covering webs (11, 12, 13) consist of a fibre fleece, of coarse-pore foam material, of a fabric, including a glass fibre fleece or glass fibre cloth.

7. Filter mat according to one of claims 1 to 6, characterised in that the particulate filter material consists of at least one of the following materials: impregnated or non-impregnated activated carbon, alumina, a molecular sieve, silica gel, alkaline-reacting and/or acid-reacting sorbents.

8. Filter mat according to one of claims 1 to 7, characterised in that the mean particle size of the filter material is greater than the mean pore size of the porous covering webs (11, 12, 13).

9. Process for production of a filter mat according to one or more of claims 1 to 8, characterised in that for fixing the particulate filter material layer (14, 15) to the covering webs (11, 12, 13) the adhesive substance is sprayed in foamed state on to the surface of the covering web(s) and/or on to the surface of the already fixed particulate filter material layer (14, 15) before the individual layers (11, 12, 13, 14, 15) are fixed to constitute the laminated structure, and the solvent-free adhesive substance diluted with water is foamed-on by addition of a readily evaporating liquid.

10. Process according to claim 9, characterised in that there is added as the readily evaporating liquid a solvent which can evaporate at low temperature, preferably Freon.

**Revendications**

1. Natte filtrante montée, notamment pour hottes de cuisine, et analogue, comprenant un corps stratifié comportant au moins deux bandes de recouvrement poreuses et flexibles (11, 12, 13) et une couche (14, 15) d'une matière filtrante granuleuse (14, 15) comprise entre ces bandes de recouvrement, les bandes de recrouvrement étant fixées l'une à l'autre par une fixation superficielle comportant une pluralité de points de fixation répartis sur la surface de la natte, en une natte filtrante découpable, caractérisée en ce que l'épaisseur des bandes de recouvrement poreuses (11, 12, 13) est supérieure à l'épaisseur de la couche filtrante granuleuse (14, 15) comprise entre les bandes de recouvrement, qui est au plus égale au double de la dimension granulométrique moyenne de la matière filtrante, et en ce que les deux couches de la matière filtrante granuleuse sont fixées l'une à l'autre et aux bandes de recouvrement (11, 12, 13) au moyen d'un adhésif sans solvant, pouvant être dispersé dans l'eau, avec formation d'une pluralité d'emplacements de liaison par adhésif ponctuels et en forme de fibres, et, par suite, les bandes de recouvrement (11, 12, 13) sont fixées l'une à l'autre au moyen du collage granuleux.

2. Natte filtrante selon la revendication 1, caractérisée en ce que l'épaisseur de la couche filtrante (14, 15) est égale à la dimension granulométrique moyenne de la matière filtrante.

3. Natte filtrante selon la revendication 1 ou 2, caractérisée en ce qu'elle comporte au moins trois bandes de recouvrement poreuses (11, 12, 13) avec au moins deux couches filtrantes granuleuses (14, 15) fixées entre elles, toutes les bandes de recouvrement présentant une épaisseur supérieure à celle des couches filtrantes granuleuses.

4. Natte filtrante selon l'une quelconque des revendications 1 à 3, caractérisée en ce que la dimension granulométrique moyenne de la matière filtrante est d'environ 0,5 à 2 mm, tandis que les bandes de recouvrement poreuses (11, 12, 13) présentent une épaisseur d'environ 1 à 8 mm, de préférence de 3 à 6 mm.

5. Natte filtrante selon la revendication 4, caractérisée en ce que l'adhésif est constitué par l'une au moins des substances suivantes: le latex, l'acétate de polyvinyle, l'alcool polyvinylique, des copolymérisats d'esters acryliques.

6. Natte filtrante selon l'une des revendications 1 à 5, caractérisée en ce que les bandes de recouvrement (11, 12, 13) sont constituées par une étoffe non tissée, une mousse à macropores, un tissu, y compris une étoffe de fibres de verre non-tissée ou un tissu de fibres de verre.

7. Natte filtrante selon l'une des revendications 1 à 6, caractérisée en ce que la matière filtrante granuleuse est constituée par l'une au moins des substances suivantes: du charbon actif imprégné ou non-imprégné, de l'alumine, un tamis moléculaire, du gel de silice, des sorbants à réaction alcaline et/ou acide.

8. Natte filtrante selon l'une des revendications 1 à 7, caractérisée en ce que la dimension granulométrique moyenne de la matière filtrante est supérieure à la grandeur moyenne de pores des bandes de recouvrement poreuses (11, 12, 13).

9. Procédé de fabrication d'une natte filtrante selon une ou plusieurs des revendications 1 à 8, caractérisé en ce que pour fixer la couche filtrante granuleuse (14, 15) aux bandes de recouvrement (11, 12, 13), on applique par pulvérisation l'adhésif, à l'état de mousse, à la surface de la bande ou des bandes de de recouvrement et/ou à la surface de la couche filtrante granuleuse (14, 15) déjà fixée, avant de fixer les différentes couches (11, 12, 13, 14, 15) au corps stratifié, en faisant mousser l'adhésif dépourvu de solvant, dilué avec de l'eau, par addition d'un liquide se vaporisant facilement.

10. Procédé selon la revendication 9, caractérisé en ce qu'on ajoute, comme liquide se vaporisant facilement, un solvant se vaporisant à basse température, de préférence du fréon.

0 069 323

FIG.1

FIG.2

FIG.3

7